(19) Europäisches Patentamt
European Patent Office
Office européen des brevets

(11) **EP 4 546 026 A2**

(12) **EUROPEAN PATENT APPLICATION**

(43) Date of publication:
**30.04.2025 Bulletin 2025/18**

(21) Application number: **25156029.8**

(22) Date of filing: **22.07.2020**

(51) International Patent Classification (IPC):
**G02B 9/64** (2006.01)

(52) Cooperative Patent Classification (CPC):
**G02B 13/0045; G02B 9/64; G02B 13/02**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.08.2019 US 201962889633 P**

(62) Document number(s) of the earlier application(s) in accordance with Art. 76 EPC:
**20855658.9 / 3 850 414**

(71) Applicant: **Corephotonics Ltd.**
**6492103 Tel Aviv (IL)**

(72) Inventors:
• **Rudnick, Roy**
 **6492103 Tel Aviv (IL)**

• **Dror, Michael**
 **Tel Aviv (IL)**
• **Goldenberg, Ephraim**
 **6492103 Tel Aviv (IL)**

(74) Representative: **Kasche & Partner**
 **Bühlstrasse 1**
 **8125 Zollikerberg/Zürich (CH)**

Remarks:
This application was filed on 05-02-2025 as a divisional application to the application mentioned under INID code 62.

(54) **LOW TOTAL TRACK LENGTH FOR LARGE SENSOR FORMAT**

(57) Lens assemblies comprising from an object side to an image side, seven lens elements numbered L1-L7; an optical window; and an image sensor having a sensor diagonal length (SDL), wherein an exemplary lens assembly has a total track length TTL that includes the optical window an effective focal length EFL and a field of view (FOV), wherein TTL/EFL < 1.100, wherein TTL/SDL < 0.64, wherein FOV< 90 degrees, wherein a normalized thickness standard deviation constant T_STD of at least four of the seven lens elements complies with T_STD < 0.035, and wherein a focal length $f_1$ of lens element L1 fulfills $f_1$/EFL<0.95.

FIG. 1

EP 4 546 026 A2

**Description**

FIELD

Embodiments disclosed herein relate to optical lenses, and more particularly, to miniature lens assemblies.

BACKGROUND

Digital camera modules are now standard in a variety of host devices. Such host devices include cellular telephones (smartphones), personal data assistants (PDAs), computers, and so forth. Cameras in smartphones in particular require a compact imaging lens system for good quality imaging and with a small total track length (TTL) relative to the size of the image sensor in such cameras. The image sensor size can always be expressed by the sensor diagonal, SDL.

SUMMARY

In various exemplary embodiments, there are disclosed lens assemblies comprising: from an object side to an image side, seven lens elements numbered L1-L7, an optical window and an image sensor having a sensor diagonal length (SDL), wherein an exemplary lens assembly has a total track length TTL that includes the optical window, an effective focal length (EFL) and a field of view (FOV), wherein TTL/EFL < 1.100, wherein TTL/SDL < 0.64, wherein FOV< 90 degrees, wherein a normalized thickness standard deviation constant T_STD of at least four of the seven lens elements complies with T_STD < 0.035, and wherein a focal length $f_1$ of lens element L1 fulfills $f_1$/EFL<0.95.

In an embodiment, D/2 is an aperture radius and wherein a sign of z(r) from z(0.85*D/2) to z(D/2) is positive for surfaces $LO_1$, $LI_1$ of L1 and surfaces $LO_2$, $LI_2$ of L2, and negative for surfaces $LO_4$, $LI_4$ of L4, $LO_5$, $LI_5$ of L5 $LO_6$, $LI_6$ of L6 and $LO_7$, $LI_7$ of L7.

In some embodiments, ach element has a clear aperture (CA) and wherein a CA of lens elements L3 or L4 is the smallest of all CAs in the lens assembly.

In some embodiments, TTL/EFL < 1.090.

In some embodiments, TTL/EFL < 1.083.

In some embodiments, TTL/ SDL < 0.63.

In some embodiments, TTL/ SDL < 0.61.

In some embodiments, lens element L1 is convex on the object side.

In some embodiments, the lens elements have, starting with lens element L1, a power sign sequence of positive-negative-positive-negative-positive-positive-negative.

In some embodiments, the CT of at least 6 of the 7 lens elements complies CT/TTL<0.07.

In some embodiments, the T_STD of at least 5 of the 7 lens elements complies with T_STD < 0.06.

In some embodiments, the T_STD of at least 5 of the 7 lens elements complies with T_STD < 0.05.

In some embodiments, $f_1$/EFL<0.9.

In some embodiments, $f_1$/EFL <0.85;

In some embodiments, a focal length $f_5$ of lens element L5 fulfills $|f_5$/EFL|>4.0.

In some embodiments, focal length $f_5$ of lens element L5 fulfills $|f_5$/EFL|>6.0.

In some embodiments, focal length $f_5$ of lens element L5 fulfills $|f_5$/EFL|>8.0.

In some embodiments, a focal length $f_6$ of lens element L6 fulfills $f_6$/EFL|>15.0.

In some embodiments, a focal length $f_6$ of lens element L6 fulfills $f_6$/EFL|>30.0.

In some embodiments, a focal length $f_6$ of lens element L6 fulfills $f_6$/EFL|>45.0.

In some embodiments, a normalized gap standard deviation constant G_STD of a gap between lens elements L1 and L2 complies with G_STD < 0. 006.

In some embodiments, a normalized gap standard deviation constant G_STD of a gap between lens elements L1 and L2 complies with G_STD < 0.01.

In some embodiments, a normalized gap standard deviation constant G_STD of a gap between lens elements L1 and L2 complies with G_STD < 0.007.

In some embodiments, SDL =12mm and FOV < 82.1 degrees.

BRIEF DESCRIPTION OF THE DRAWINGS

Non-limiting examples of embodiments disclosed herein are described below with reference to figures attached hereto that are listed following this paragraph. Identical structures, elements or parts that appear in more than one figure are generally labeled with a same numeral in all the figures in which they appear. The drawings and descriptions are meant to illuminate and clarify embodiments disclosed herein and should not be considered limiting in any way. In the drawings:

FIG. 1 shows an exemplary embodiment of a lens assembly disclosed herein;
FIG. 2A shows an example for calculation of NT for calculation of T_STD using Eq. 3;
FIG. 2B shows an example of a lens profile obtained using the data in Table 3A;
FIG. 2C shows an example for calculation of the gap for calculation of G_STD using Eq. 5;
FIG. 2D shows an example of a profile of a gap between lens elements obtained using the data of Table 3C.

DETAILED DESCRIPTION

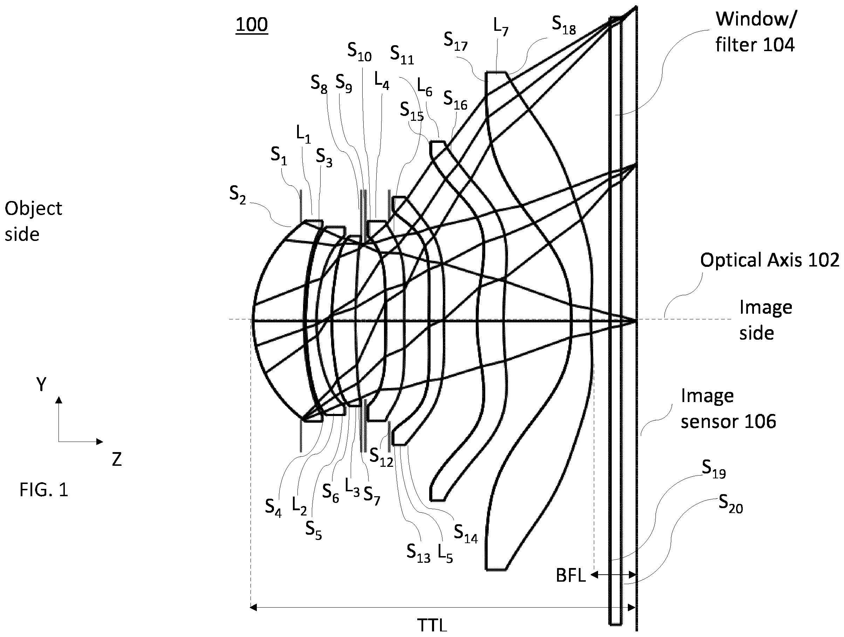

FIG. 1 shows an embodiment of an optical lens system disclosed herein and numbered 100. Embodiment 100 comprises in order from an object side to an image side a plurality of lens elements (here exemplarily seven lens elements numbered L1-L7) with a common optical axis 102. The lens further comprises three aperture stops marked S1 and two blocking surfaces S8 and S9. Lens element surfaces are marked "Si", with S2 marking an object side surface of first lens element L1 and S18 marking an image side of lens element L7. Lens 100 further comprises an optional glass window 104 disposed between surface S18 and an image sensor 106 for image formation of an object. Image sensor 106 has a size characterized by an image sensor diagonal SDL.

The TTL is defined as the distance from the $S_1$ to the image sensor. FIG. 1 also shows a back focal length (BFL), defined as the distance from the last surface of the last lens element $S_{2N}$ to the image sensor.

For convenience in some equations and relations presented below, lens element surfaces are also marked "$LO_i$" on the object side surface of lens element number $i$ and "$LI_i$" on the image side surface of lens element number $i$.

Surface types

Surface types are defined in Table 1 and the coefficients for the surfaces are in Table 2:

a) Plano: flat surfaces, no curvature
b) Q type 1 (QT1) surface sag formula:

$$(Eq.\,1) \qquad z(r) = \frac{cr^2}{1 + \sqrt{1 - (1 + k)c^2 r^2}} + D_{con}(u)$$

$$D_{con}(u) = u^4 \sum_{n=0}^{N} A_n \, Q_n^{con}(u^2)$$

$$u = \frac{r}{r_{norm}}, x = u^2$$

$$Q_0^{con}(x) = 1 \quad Q_1^{con} = -(5 - 6x) \quad Q_2^{con} = 15 - 14x(3 - 2x)$$

$$Q_3^{con} = -\{35 - 12x[14 - x(21 - 10x)]\}$$

$$Q_4^{con} = 70 - 3x\{168 - 5x[84 - 11x(8 - 3x)]\}$$

$$Q_5^{con} = -[126 - x(1260 - 11x\{420 - x[720 - 13x(45 - 14x)]\})]$$

where {z, r} are the standard cylindrical polar coordinates, c is the paraxial curvature of the surface, k is the conic parameter, $r_{norm}$ is generally one half of the surface's clear aperture, and $A_n$ are the polynomial coefficients shown in lens data tables. z - axis is positive towards image.

In this specification, the term "$RMO_i$" refers to the aperture radius of a surface $LO_i$. The term "$RMI_i$" refers to the aperture radius of a surface $LI_i$.

In this specification, the term "normal thickness" (NT) is a function of r marked $NT_i(r)$, and refers to the distance between the two surfaces of a lens element at coordinate r along the normal vector of the surface closer to object. Several functions and constants are defined per normal thickness:

For r=0, $NT_i(r=0)$ is defined as the central thickness (CT) of lens element i ($CT_i$)
A "thickness average" ($T\_AVG_i$) constant is given by:

$$(Eq.2) \qquad T\_AVG_i = \frac{1}{N}\sum_{k=0}^{N} NT_i\left(\frac{k \cdot RMO_i}{N}\right)$$

where k is a discrete variable that runs from 0 to N, where N is an integer >10 (for this and all other functions and constants below).

A normalized thickness standard deviation ($T\_STD_i$) constant is given by:

$$(Eq.3) \qquad T\_STD_i = \frac{1}{RMO_i}\sqrt{\frac{1}{N}\sum_{k=0}^{N}\left(NT_i\left(\frac{k \cdot RMO_i}{N}\right) - T\_AVG_i\right)^2}$$

where k is a discrete variable that runs from 0 to N, and where $T\_AVG_i$ is defined as in (Eq.2).

In this specification, a "gap" or an "air gap" refers to the space between consecutive lens elements. Several functions and constants per gap are defined:

A "$Gap_i(r)$" function (for r = 0, an "on-axis gap" $OA\_Gap_i$) is defined as the thickness $LI_i$
$Gap_i(r) = OA\_Gap_i + z(r)$ of $LI_i$ - $z(r)$ of $LO_{i+1}$, where z(r) is it standard polar coordinate z. $OA\_Gap_i(r=0)$ of $LI_i$ is the air thickness which is the air gap for r=0.

A "gap average" ($G\_AVG_i$) constant is given by:

$$(Eq.4) \qquad G\_AVG_i = \frac{1}{N}\sum_{k=0}^{N} Gap_i\left(\frac{k \cdot Rmin_i}{N}\right)$$

where k is a discrete variable that runs from 0 to N, where N is an integer >10, and where $Rmin_i$ is the minimum aperture radius value of surfaces {$RMI_i$, $RMO_{i+1}$};

A normalized gap standard deviation ($G\_STD_i$) constant is given by:

$$(Eq.5) \qquad G\_STD_i = \frac{1}{Rmin_i}\sqrt{\frac{1}{N}\sum_{k=0}^{N}\left(Gap_i\left(\frac{k \cdot Rmin_i}{N}\right) - G\_AVG_i\right)^2}$$

and $G\_AVG_i$ is defined as in (Eq.4).

Table 1

| EFL=6.75 mm, F# = 1.80, HFOV = 41.0 deg. | | | | | | | | | |
|---|---|---|---|---|---|---|---|---|---|
| Surface # | Comment | Type | Curvature Radius | Central Thickness | Aperture Radius (D/2) | Material | Index | Abbe # | Focal Length f |
| 1 | A.S | Plano | Infinity | -0.908 | 1.880 | | | | |
| 2 | $L_1$ | QT1 | 2.331 | 0.965 | 1.910 | Plastic | 1.54 | 55.9 | 6.55 |
| 3 | | | 5.744 | 0.032 | 1.800 | | | | |
| 4 | $L_2$ | QT1 | 4.828 | 0.208 | 1.790 | Plastic | 1.67 | 19.4 | -13.88 |
| 5 | | | 3.122 | 0.289 | 1.630 | | | | |
| 6 | $L_3$ | QT1 | 5.131 | 0.452 | 1.620 | Plastic | 1.54 | 55.9 | 17.40 |
| 7 | | | 10.834 | 0.110 | 1.530 | | | | |

(continued)

| Surface # | Comment | Type | Curvature Radius | Central Thickness | Aperture Radius (D/2) | Material | Index | Abbe # | Focal Length f |
|---|---|---|---|---|---|---|---|---|---|
| | | | EFL=6.75 mm, F# = 1.80, HFOV = 41.0 deg. | | | | | | |
| 8 | Stop | Plano | Infinity | 0.080 | 1.470 | | | | |
| 9 | Stop | Plano | Infinity | 0.383 | 1.480 | | | | |
| 10 | L₄ | QT1 | -725.052 | 0.358 | 1.620 | Plastic | 1.67 | 19.4 | -55.34 |
| 11 | | | 39.028 | -0.290 | 1.900 | | | | |
| 12 | Stop | Plano | Infinity | 0.760 | 1.905 | | | | |
| 13 | L₅ | QT1 | 16.247 | 0.281 | 2.150 | Plastic | 1.57 | 37.4 | 308.74 |
| 14 | | | 17.8 | 0.631 | 2.360 | | | | |
| 15 | L₆ | QT1 | 3.628 | 0.503 | 3.180 | Plastic | 1.60 | 28.3 | 11.50 |
| 16 | | | 7.205 | 1.295 | 3.420 | | | | |
| 17 | L₇ | QT1 | -4.684 | 0.369 | 4.500 | Plastic | 1.54 | 55.9 | -4.97 |
| 18 | | | 6.612 | 0.366 | 4.740 | | | | |
| 19 | Filter | Plano | Infinity | 0.2100 | 6.600 | Glass | 1.52 | 64.2 | |
| 20 | | | Infinity | 0.3000 | 6.600 | | | | |
| 21 | Image | Plano | Infinity | - | 6.200 | | | | |

\* Reference wavelength is 587.6 nm (d - line)\* Units are in mm except for index and Abbe #. HFOV indicates half field of view

Table 2

| | | Aspheric Coefficients | | | |
|---|---|---|---|---|---|
| Surface # | $R_{norm}$ | A4 | A6 | A8 | A10 |
| 2 | 1.932 | 9.9940E-03 | -4.7500E-03 | -2.9987E-03 | -9.0698E-04 |
| 3 | 1.932 | 8.7490E-02 | 6.5977E-02 | 2.4979E-02 | 1.6077E-02 |
| 4 | 1.847 | 1.1859E-02 | 6.3506E-02 | 9.9150E-04 | 6.1490E-03 |
| 5 | 1.677 | 5.3358E-02 | 5.0530E-02 | -3.1217E-03 | -1.4993E-03 |
| 6 | 1.666 | 4.9696E-02 | 5.5310E-02 | 1.6953E-02 | 5.2611E-03 |
| 7 | 1.610 | -1.3866E-02 | 2.8507E-02 | 1.4152E-02 | 6.3734E-03 |
| 10 | 1.717 | -4.2084E-01 | -4.7698E-02 | -1.6836E-02 | -9.1824E-03 |
| 11 | 1.972 | -4.8789E-01 | 2.9587E-02 | 2.9227E-02 | 9.8845E-03 |
| 13 | 2.107 | -8.3702E-01 | -4.1159E-02 | 2.3372E-02 | 2.7289E-02 |
| 14 | 2.399 | -1.0545E+00 | 1.1548E-01 | 8.9981E-03 | 4.5560E-03 |
| 15 | 3.049 | -2.8037E+00 | 2.8375E-01 | 5.5647E-02 | -2.1641E-02 |
| 16 | 3.398 | -2.3573E+00 | 3.7757E-01 | 3.7804E-02 | -4.3086E-02 |
| 17 | 4.316 | 6.5309E-01 | 8.4437E-01 | -4.0343E-01 | 1.9637E-01 |
| 18 | 4.670 | -4.2765E+00 | 9.9979E-01 | -3.6429E-01 | 2.0098E-01 |

Table 2 (continued)

| Aspheric Coefficients | | | | | |
|---|---|---|---|---|---|
| Surface # | A12 | A14 | A16 | A18 | A20 |
| 2 | -3.3763E-04 | -8.8742E-05 | -5.9283E-05 | 0.0000E+00 | 0.0000E+00 |
| 3 | 5.9956E-03 | 5.5077E-03 | 1.2558E-03 | 0.0000E+00 | 0.0000E+00 |
| 4 | -4.1612E-04 | 2.6196E-03 | 5.9748E-04 | 0.0000E+00 | 0.0000E+00 |
| 5 | -2.6943E-03 | -4.6173E-04 | -1.5513E-04 | 0.0000E+00 | 0.0000E+00 |
| 6 | 1.1659E-03 | 2.5551E-04 | 5.3420E-05 | 0.0000E+00 | 0.0000E+00 |
| 7 | 2.6374E-03 | 8.6554E-04 | 2.1797E-04 | 0.0000E+00 | 0.0000E+00 |
| 10 | -4.7317E-03 | -1.8472E-03 | -4.5679E-04 | 0.0000E+00 | 0.0000E+00 |
| 11 | 1.3992E-03 | -2.7093E-04 | -2.0424E-04 | 0.0000E+00 | 0.0000E+00 |
| 13 | 5.2402E-03 | 9.4540E-04 | 2.0861E-04 | 1.8088E-04 | 0.0000E+00 |
| 14 | -1.0297E-02 | 3.1228E-03 | 4.0339E-03 | 1.4174E-03 | 0.0000E+00 |
| 15 | -1.1934E-02 | 2.9700E-03 | 4.8437E-03 | -6.6223E-04 | -6.9121E-04 |
| 16 | 8.4277E-03 | 7.9687E-03 | 3.9145E-03 | -3.9617E-03 | -8.7507E-04 |
| 17 | -6.6969E-02 | 2.4300E-02 | -6.4810E-03 | 1.6529E-03 | -1.0244E-04 |
| 18 | -1.0479E-01 | 3.6269E-02 | -1.0994E-02 | 4.8537E-03 | -4.6735E-04 |

Calculation of T_STD for the lens based on the original specification:

Using Eq. 2 and Eq. 3, one can calculate the thickness of the lens (NT) in 100 steps (N). The thickness is calculated in each step using the 'SAGG' operand in every iteration. The equation of the thickness using the front and rear sag of every lens and the central thickness (CT) is:

$$NT = CT - front\ sag + rear\ sag$$

For example, see lens element 7, FIG. 3A. The values of the front and rear sag for lens element 7 are given in Table 3A:

Table 3A

| | front sag | rear sag | | front sag | rear sag | | front sag | rear sag |
|---|---|---|---|---|---|---|---|---|
| 0 | 0 | 0 | 0.34 | -0.461 | -0.0666 | 0.68 | -1.4317 | -0.5852 |
| 0.01 | -0.0002 | 0.0002 | 0.35 | -0.4924 | -0.0776 | 0.69 | -1.4475 | -0.6062 |
| 0.02 | -0.0009 | 0.0006 | 0.36 | -0.5245 | -0.089 | 0.7 | -1.4624 | -0.6278 |
| 0.03 | -0.002 | 0.0014 | 0.37 | -0.5571 | -0.1009 | 0.71 | -1.4764 | -0.6501 |
| 0.04 | -0.0035 | 0.0024 | 0.38 | -0.5902 | -0.1132 | 0.72 | -1.4895 | -0.6731 |
| 0.05 | -0.0056 | 0.0036 | 0.39 | -0.6237 | -0.1259 | 0.73 | -1.5019 | -0.6968 |
| 0.06 | -0.0082 | 0.0051 | 0.4 | -0.6575 | -0.1389 | 0.74 | -1.5134 | -0.7213 |
| 0.07 | -0.0113 | 0.0067 | 0.41 | -0.6915 | -0.1522 | 0.75 | -1.5242 | -0.7465 |
| 0.08 | -0.0151 | 0.0085 | 0.42 | -0.7256 | -0.1658 | 0.76 | -1.5343 | -0.7725 |
| 0.09 | -0.0195 | 0.0104 | 0.43 | -0.7597 | -0.1796 | 0.77 | -1.5436 | -0.7991 |
| 0.1 | -0.0246 | 0.0122 | 0.44 | -0.7938 | -0.1936 | 0.78 | -1.5522 | -0.8265 |
| 0.11 | -0.0304 | 0.0141 | 0.45 | -0.8277 | -0.2078 | 0.79 | -1.5603 | -0.8545 |
| 0.12 | -0.0371 | 0.0158 | 0.46 | -0.8613 | -0.2221 | 0.8 | -1.5676 | -0.8832 |

(continued)

|      | front sag | rear sag |      | front sag | rear sag |      | front sag | rear sag |
|------|-----------|----------|------|-----------|----------|------|-----------|----------|
| 0.13 | -0.0447 | 0.0174 | 0.47 | -0.8946 | -0.2366 | 0.81 | -1.5744 | -0.9125 |
| 0.14 | -0.0531 | 0.0188 | 0.48 | -0.9276 | -0.2512 | 0.82 | -1.5807 | -0.9423 |
| 0.15 | -0.0626 | 0.0199 | 0.49 | -0.9601 | -0.2659 | 0.83 | -1.5864 | -0.9726 |
| 0.16 | -0.073 | 0.0206 | 0.5 | -0.992 | -0.2807 | 0.84 | -1.5916 | -1.0032 |
| 0.17 | -0.0846 | 0.021 | 0.51 | -1.0234 | -0.2957 | 0.85 | -1.5964 | -1.0342 |
| 0.18 | -0.0972 | 0.0209 | 0.52 | -1.0542 | -0.3107 | 0.86 | -1.6006 | -1.0653 |
| 0.19 | -0.1111 | 0.0203 | 0.53 | -1.0842 | -0.3259 | 0.87 | -1.6045 | -1.0965 |
| 0.2 | -0.1261 | 0.0191 | 0.54 | -1.1135 | -0.3411 | 0.88 | -1.6079 | -1.1277 |
| 0.21 | -0.1423 | 0.0174 | 0.55 | -1.1421 | -0.3566 | 0.89 | -1.611 | -1.1589 |
| 0.22 | -0.1598 | 0.015 | 0.56 | -1.1698 | -0.3722 | 0.9 | -1.6136 | -1.1898 |
| 0.23 | -0.1785 | 0.012 | 0.57 | -1.1966 | -0.3881 | 0.91 | -1.6158 | -1.2205 |
| 0.24 | -0.1984 | 0.0083 | 0.58 | -1.2227 | -0.4041 | 0.92 | -1.6177 | -1.2509 |
| 0.25 | -0.2196 | 0.0039 | 0.59 | -1.2478 | -0.4205 | 0.93 | -1.6192 | -1.2809 |
| 0.26 | -0.242 | -0.0012 | 0.6 | -1.2719 | -0.4371 | 0.94 | -1.6202 | -1.3105 |
| 0.27 | -0.2657 | -0.007 | 0.61 | -1.2952 | -0.454 | 0.95 | -1.6208 | -1.3398 |
| 0.28 | -0.2905 | -0.0135 | 0.62 | -1.3175 | -0.4714 | 0.96 | -1.6209 | -1.3686 |
| 0.29 | -0.3164 | -0.0207 | 0.63 | -1.3389 | -0.4891 | 0.97 | -1.6205 | -1.3972 |
| 0.3 | -0.3434 | -0.0287 | 0.64 | -1.3594 | -0.5073 | 0.98 | -1.6198 | -1.4256 |
| 0.31 | -0.3714 | -0.0372 | 0.65 | -1.3788 | -0.526 | 0.99 | -1.6191 | -1.4537 |
| 0.32 | -0.4004 | -0.0464 | 0.66 | -1.3974 | -0.5451 | 1 | -1.6196 | -1.4817 |
| 0.33 | -0.4303 | -0.0562 | 0.67 | -1.415 | -0.5649 |      |           |          |

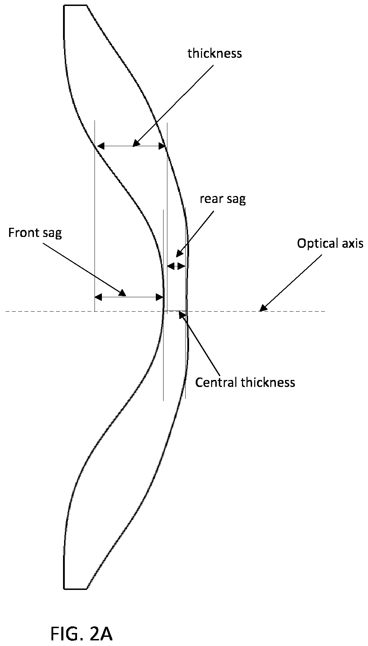

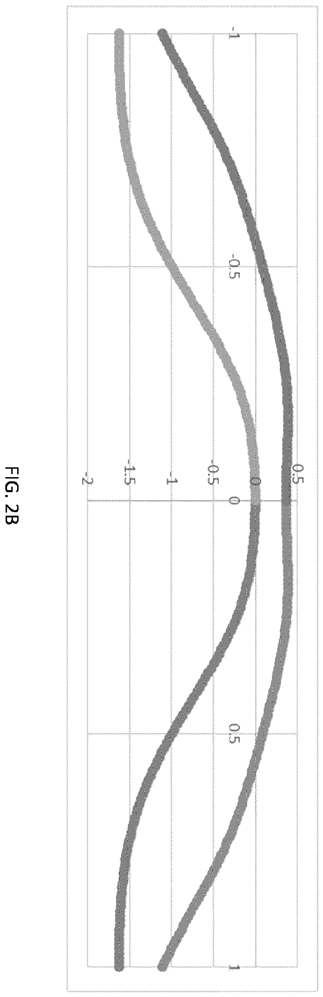

The central thickness of lens element 7 is 0.3688 mm. From the data, one can plot the lens profile in FIG. 2B. The thickness profile of lens 7 is given in Table 3B:

Table 3B

| 0 | 0.3688 | 0.26 | 0.6096 | 0.52 | 1.1123 | 0.78 | 1.0945 |
|------|--------|------|--------|------|--------|------|--------|
| 0.01 | 0.3692 | 0.27 | 0.6275 | 0.53 | 1.1271 | 0.79 | 1.0746 |
| 0.02 | 0.3703 | 0.28 | 0.6458 | 0.54 | 1.1412 | 0.8 | 1.0532 |
| 0.03 | 0.3722 | 0.29 | 0.6645 | 0.55 | 1.1543 | 0.81 | 1.0307 |
| 0.04 | 0.3747 | 0.3 | 0.6835 | 0.56 | 1.1664 | 0.82 | 1.0072 |
| 0.05 | 0.378 | 0.31 | 0.703 | 0.57 | 1.1773 | 0.83 | 0.9826 |
| 0.06 | 0.3821 | 0.32 | 0.7228 | 0.58 | 1.1874 | 0.84 | 0.9572 |
| 0.07 | 0.3868 | 0.33 | 0.7429 | 0.59 | 1.1961 | 0.85 | 0.931 |
| 0.08 | 0.3924 | 0.34 | 0.7632 | 0.6 | 1.2036 | 0.86 | 0.9041 |
| 0.09 | 0.3987 | 0.35 | 0.7836 | 0.61 | 1.21 | 0.87 | 0.8768 |
| 0.1 | 0.4056 | 0.36 | 0.8043 | 0.62 | 1.2149 | 0.88 | 0.849 |
| 0.11 | 0.4133 | 0.37 | 0.825 | 0.63 | 1.2186 | 0.89 | 0.8209 |
| 0.12 | 0.4217 | 0.38 | 0.8458 | 0.64 | 1.2209 | 0.9 | 0.7926 |
| 0.13 | 0.4309 | 0.39 | 0.8666 | 0.65 | 1.2216 | 0.91 | 0.7641 |

(continued)

| | | | | | | | |
|---|---|---|---|---|---|---|---|
| 0.14 | 0.4407 | 0.4 | 0.8874 | 0.66 | 1.2211 | 0.92 | 0.7356 |
| 0.15 | 0.4513 | 0.41 | 0.9081 | 0.67 | 1.2189 | 0.93 | 0.7071 |
| 0.16 | 0.4624 | 0.42 | 0.9286 | 0.68 | 1.2153 | 0.94 | 0.6785 |
| 0.17 | 0.4744 | 0.43 | 0.9489 | 0.69 | 1.2101 | 0.95 | 0.6498 |
| 0.18 | 0.4869 | 0.44 | 0.969 | 0.7 | 1.2034 | 0.96 | 0.6211 |
| 0.19 | 0.5002 | 0.45 | 0.9887 | 0.71 | 1.1951 | 0.97 | 0.5921 |
| 0.2 | 0.514 | 0.46 | 1.008 | 0.72 | 1.1852 | 0.98 | 0.563 |
| 0.21 | 0.5285 | 0.47 | 1.0268 | 0.73 | 1.1739 | 0.99 | 0.5342 |
| 0.22 | 0.5436 | 0.48 | 1.0452 | 0.74 | 1.1609 | 1 | 0.5067 |
| 0.23 | 0.5593 | 0.49 | 1.063 | 0.75 | 1.1465 | | |
| 0.24 | 0.5755 | 0.5 | 1.0801 | 0.76 | 1.1306 | | |
| 0.25 | 0.5923 | 0.51 | 1.0965 | 0.77 | 1.1133 | | |

Then, the average thickness ($T\_AVG_i$) is calculated using Eq. 2 and the normalized standard deviation ($T\_STD_i$) using Eq. 3, where $RMO_i$ refers to the aperture radius of a surface $LO_i$.

Calculation of G STD for the lens based on the original specification:

Using Eq. 4 and Eq. 5, one can calculate the thickness of the air gap (Gap) in 100 steps (N). The thickness is calculated in each step using the 'SAGG' operand in every iteration. The equation of the thickness using the front and rear sag of every surface and the central air gap is:

$$Gap = central\ air\ gap - front\ sag + rear\ sag$$

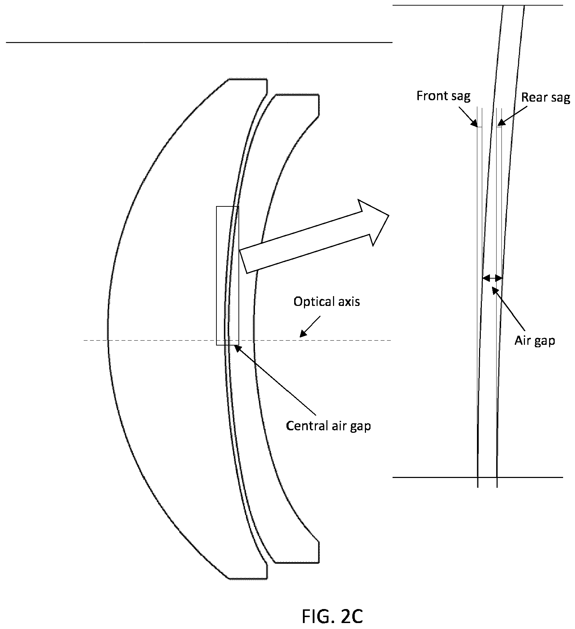

For example, see the air gap between lens elements 1 and 2 in FIG. 2C. The values of the front and rear sag for air gap between lens elements 1 and 2 are given in Table 3C:

Table 3C

| | front sag | rear sag | | front sag | rear sag | | front sag | rear sag |
|---|---|---|---|---|---|---|---|---|
| 0 | 0 | 0 | 0.34 | 0.03 | 0.0331 | 0.68 | 0.1262 | 0.1308 |
| 0.01 | 0 | 0 | 0.35 | 0.0318 | 0.035 | 0.69 | 0.1302 | 0.135 |
| 0.02 | 0.0001 | 0.0001 | 0.36 | 0.0336 | 0.0368 | 0.7 | 0.1343 | 0.1393 |
| 0.03 | 0.0003 | 0.0003 | 0.37 | 0.0355 | 0.0388 | 0.71 | 0.1384 | 0.1438 |
| 0.04 | 0.0004 | 0.0005 | 0.38 | 0.0374 | 0.0407 | 0.72 | 0.1426 | 0.1483 |
| 0.05 | 0.0007 | 0.0008 | 0.39 | 0.0394 | 0.0428 | 0.73 | 0.1469 | 0.153 |
| 0.06 | 0.001 | 0.0012 | 0.4 | 0.0414 | 0.0449 | 0.74 | 0.1512 | 0.1579 |
| 0.07 | 0.0014 | 0.0016 | 0.41 | 0.0435 | 0.047 | 0.75 | 0.1557 | 0.1629 |
| 0.08 | 0.0018 | 0.0021 | 0.42 | 0.0457 | 0.0492 | 0.76 | 0.1603 | 0.1681 |
| 0.09 | 0.0022 | 0.0026 | 0.43 | 0.048 | 0.0515 | 0.77 | 0.165 | 0.1735 |
| 0.1 | 0.0028 | 0.0033 | 0.44 | 0.0503 | 0.0538 | 0.78 | 0.1699 | 0.1791 |
| 0.11 | 0.0033 | 0.0039 | 0.45 | 0.0527 | 0.0562 | 0.79 | 0.1749 | 0.1849 |
| 0.12 | 0.004 | 0.0047 | 0.46 | 0.0551 | 0.0586 | 0.8 | 0.18 | 0.1909 |
| 0.13 | 0.0046 | 0.0054 | 0.47 | 0.0576 | 0.0612 | 0.81 | 0.1853 | 0.1972 |
| 0.14 | 0.0054 | 0.0063 | 0.48 | 0.0602 | 0.0637 | 0.82 | 0.1908 | 0.2037 |

(continued)

| | front sag | rear sag | | front sag | rear sag | | front sag | rear sag |
|---|---|---|---|---|---|---|---|---|
| 0.15 | 0.0061 | 0.0072 | 0.49 | 0.0629 | 0.0664 | 0.83 | 0.1965 | 0.2105 |
| 0.16 | 0.007 | 0.0081 | 0.5 | 0.0656 | 0.0691 | 0.84 | 0.2024 | 0.2176 |
| 0.17 | 0.0078 | 0.0091 | 0.51 | 0.0684 | 0.0719 | 0.85 | 0.2086 | 0.225 |
| 0.18 | 0.0088 | 0.0102 | 0.52 | 0.0713 | 0.0748 | 0.86 | 0.2149 | 0.2328 |
| 0.19 | 0.0097 | 0.0113 | 0.53 | 0.0742 | 0.0777 | 0.87 | 0.2215 | 0.2408 |
| 0.2 | 0.0107 | 0.0124 | 0.54 | 0.0772 | 0.0807 | 0.88 | 0.2284 | 0.2492 |
| 0.21 | 0.0118 | 0.0136 | 0.55 | 0.0803 | 0.0838 | 0.89 | 0.2355 | 0.258 |
| 0.22 | 0.0129 | 0.0148 | 0.56 | 0.0835 | 0.087 | 0.9 | 0.2429 | 0.2671 |
| 0.23 | 0.0141 | 0.0161 | 0.57 | 0.0867 | 0.0902 | 0.91 | 0.2507 | 0.2767 |
| 0.24 | 0.0153 | 0.0175 | 0.58 | 0.09 | 0.0935 | 0.92 | 0.2588 | 0.2866 |
| 0.25 | 0.0165 | 0.0188 | 0.59 | 0.0933 | 0.0969 | 0.93 | 0.2672 | 0.2971 |
| 0.26 | 0.0178 | 0.0202 | 0.6 | 0.0967 | 0.1003 | 0.94 | 0.276 | 0.308 |
| 0.27 | 0.0192 | 0.0217 | 0.61 | 0.1002 | 0.1039 | 0.95 | 0.2853 | 0.3194 |
| 0.28 | 0.0206 | 0.0232 | 0.62 | 0.1038 | 0.1075 | 0.96 | 0.2951 | 0.3315 |
| 0.29 | 0.022 | 0.0247 | 0.63 | 0.1073 | 0.1111 | 0.97 | 0.3056 | 0.3443 |
| 0.3 | 0.0235 | 0.0263 | 0.64 | 0.111 | 0.1149 | 0.98 | 0.3168 | 0.3579 |
| 0.31 | 0.0251 | 0.028 | 0.65 | 0.1147 | 0.1187 | 0.99 | 0.3288 | 0.3726 |
| 0.32 | 0.0267 | 0.0296 | 0.66 | 0.1185 | 0.1227 | 1 | 0.3421 | 0.3886 |
| 0.33 | 0.0283 | 0.0314 | 0.67 | 0.1223 | 0.1267 | | | |

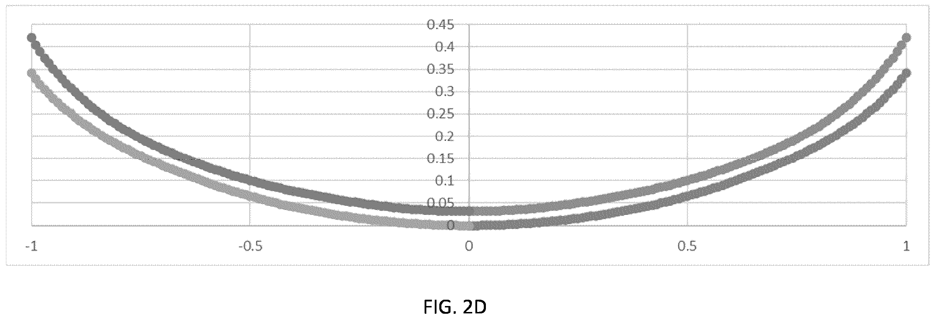

The central air gap between lens 1 and lens 2 is 0.0316 mm. From the data, one can then plot the gap profile in FIG. 2D. The air gap thickness profile of air gap between lens 1 and lens 2 is given in Table 3D:

Table 3D

| 0 | 0.0316 | 0.26 | 0.034 | 0.52 | 0.0351 | 0.78 | 0.0408 |
|---|---|---|---|---|---|---|---|
| 0.01 | 0.0316 | 0.27 | 0.0341 | 0.53 | 0.0351 | 0.79 | 0.0416 |
| 0.02 | 0.0316 | 0.28 | 0.0342 | 0.54 | 0.0351 | 0.8 | 0.0425 |
| 0.03 | 0.0316 | 0.29 | 0.0343 | 0.55 | 0.0351 | 0.81 | 0.0435 |
| 0.04 | 0.0317 | 0.3 | 0.0344 | 0.56 | 0.0351 | 0.82 | 0.0445 |
| 0.05 | 0.0317 | 0.31 | 0.0345 | 0.57 | 0.0351 | 0.83 | 0.0456 |
| 0.06 | 0.0318 | 0.32 | 0.0345 | 0.58 | 0.0351 | 0.84 | 0.0468 |
| 0.07 | 0.0318 | 0.33 | 0.0347 | 0.59 | 0.0352 | 0.85 | 0.048 |
| 0.08 | 0.0319 | 0.34 | 0.0347 | 0.6 | 0.0352 | 0.86 | 0.0495 |
| 0.09 | 0.032 | 0.35 | 0.0348 | 0.61 | 0.0353 | 0.87 | 0.0509 |
| 0.1 | 0.0321 | 0.36 | 0.0348 | 0.62 | 0.0353 | 0.88 | 0.0524 |
| 0.11 | 0.0322 | 0.37 | 0.0349 | 0.63 | 0.0354 | 0.89 | 0.0541 |
| 0.12 | 0.0323 | 0.38 | 0.0349 | 0.64 | 0.0355 | 0.9 | 0.0558 |
| 0.13 | 0.0324 | 0.39 | 0.035 | 0.65 | 0.0356 | 0.91 | 0.0576 |
| 0.14 | 0.0325 | 0.4 | 0.0351 | 0.66 | 0.0358 | 0.92 | 0.0594 |
| 0.15 | 0.0327 | 0.41 | 0.0351 | 0.67 | 0.036 | 0.93 | 0.0615 |

(continued)

| 0.16 | 0.0327 | 0.42 | 0.0351 | 0.68 | 0.0362 | 0.94 | 0.0636 |
|------|--------|------|--------|------|--------|------|--------|
| 0.17 | 0.0329 | 0.43 | 0.0351 | 0.69 | 0.0364 | 0.95 | 0.0657 |
| 0.18 | 0.033 | 0.44 | 0.0351 | 0.7 | 0.0366 | 0.96 | 0.068 |
| 0.19 | 0.0332 | 0.45 | 0.0351 | 0.71 | 0.037 | 0.97 | 0.0703 |
| 0.2 | 0.0333 | 0.46 | 0.0351 | 0.72 | 0.0373 | 0.98 | 0.0727 |
| 0.21 | 0.0334 | 0.47 | 0.0352 | 0.73 | 0.0377 | 0.99 | 0.0754 |
| 0.22 | 0.0335 | 0.48 | 0.0351 | 0.74 | 0.0383 | 1 | 0.0781 |
| 0.23 | 0.0336 | 0.49 | 0.0351 | 0.75 | 0.0388 | | |
| 0.24 | 0.0338 | 0.5 | 0.0351 | 0.76 | 0.0394 | | |
| 0.25 | 0.0339 | 0.51 | 0.0351 | 0.77 | 0.0401 | | |

Then, one can calculate the gap average $(G\_AVG_i)$ using Eq. 4, and the normalized standard deviation $(G\_STD_i)$ using Eq. 5 where $Rmin_i$ is the minimum aperture radius value of surfaces {$RMI_i$, $RMO_{i+1}$}.

Using Eq. 3 and the parameters given in Tables 1 and 2, the following values are calculated for T_STD for lens elements L1... -L7:

| L1 | 0.086029 |
|----|----------|
| L2 | 0.043499 |
| L3 | 0.02944 |
| L4 | 0.019337 |
| L5 | 0.022676 |
| L6 | 0.02971 |
| L7 | 0.064714 |

Using Eq. 5 and the parameters given in Tables 1 and 2, the following values are calculated for G_STD for gaps L1-2..._L6-7:

| L1-2 | 0.005903 |
|------|----------|
| L2-3 | 0.035826 |
| L3-4 | 0.059022 |
| L4-5 | 0.013084 |
| L5-6 | 0.076052 |
| L6-7 | 0.259283 |

Table 4 below summarizes the design characteristics and parameters as they appear in the example listed above. These characteristics help to achieve the goal of a compact lens (i.e. small TTL) with a large image height (i.e. large SDL) and small F number (F#):

Table 4

"AA": AA ≡ TTL/EFL < 1.100, $AA_2$ ≡ TTL/EFL < 1.090, $AA_3$ ≡ TTL/EFL < 1.083;
"BB": $BB_1$ ≡ TTL/SDL < 0.64, $BB_2$ ≡ TTL/ SDL < 0.63, $BB_3$ ≡ TTL/ SDL < 0.61;
"CC": Lens 1 is convex on object side;
"DD": the CA of Lens 3 or Lens 4 is the smallest of all element CAs;
"EE": power sign sequence: +-+-++-;
"FF": The central thickness (CT) of at least 6 of the 7 lens elements complies with: $FF_1$ = CT/TTL<0.07;

(continued)

| "GG": | The T_STD of at least 5 of the 7 lens elements complies with: $GG_1 \equiv$ T_STD < 0.06, $GG_2 \equiv$ T_STD < 0.05; |
| "HH": | The T_STD of at least 4 of the 7 lens elements complies with: $HH_1 \equiv$ T_STD < 0.035, $HH_2 \equiv$ T_STD /CT< 0.03; |
| "II" | Sign of z(r) from z(0.85*D/2) to z(D/2) is positive for surfaces $LO_1$, $LI_1$, $LO_2$, $LI_2$, and negative for surfaces $LO_4$, $LI_4$, $LO_5$, $LI_5$, $LO_6$, $LI_6$, $LO_7$, $LI_7$; |
| "JJ": | $JJ_1 \equiv f_1/EFL<0.95$, $JJ_2 \equiv f_1/EFL<0.9$, $JJ_3 \equiv f_1/EFL <0.85$; |
| "KK": | $KK_1 \equiv |f_5/EFL|>4.0$, $KK_2 \equiv|f_5/EFL|>6.0$, $KK_3 \equiv|f_5/EFL|>8.0$; |
| "LL": | $LL_1 \equiv |f_6/EFL|>15.0$, $LL_2 \equiv|f_6/EFL|>30.0$, $LL_2 \equiv|f_6/EFL|>45.0$; |
| "MM": | Gap between Lens 1 and Lens 2 that complies with: $MM_1 \equiv$ G_STD < 0.006, $MM_2 \equiv$ G_STD < 0.01 and $MM_3 \equiv$ G_STD < 0.007; |
| "NN": | for the given SDL (12mm), $0 \leq$ FOV < 82.1 degrees. |

In summary, various lens assembly embodiments disclosed herein have or fulfill different design characteristics and parameters listed in the Tables above.

While this disclosure describes a limited number of embodiments, it will be appreciated that many variations, modifications and other applications of such embodiments may be made. In general, the disclosure is to be understood as not limited by the specific embodiments described herein, but only by the scope of the appended claims.

**Claims**

1.  A lens assembly comprising: from an object side to an image side,

    seven lens elements numbered L1-L7;
    an optical window; and
    an image sensor having a sensor diagonal length SDL,
    wherein the lens assembly has a total track length TTL, an effective focal length EFL, a field of view FOV < 90 degrees and a f number f/# < 2, wherein TTL/EFL < 1.100, wherein TTL/SDL < 0.64, wherein a focal length $f_1$ of lens element L1 fulfills $f_1$ < EFL, wherein the lens element L1 is convex on the object side, wherein each lens element has a clear aperture CA, and wherein the CA of lens elements L3 or L4 is the smallest of all CAs in the lens assembly.

2.  The lens assembly of claim 1, wherein a power sign sequence of the seven lens elements numbered L1-L7 is +-+-++-.

3.  The lens assembly of claim 1, wherein f/# < 1.9.

4.  The lens assembly of claim 1, wherein f/# ≤ 1.8.

5.  The lens assembly of claim 1, wherein TTL/EFL < 1.090.

6.  The lens assembly of claim 1, wherein TTL/ SDL < 0.63.

7.  The lens assembly of claim 1, wherein TTL/ SDL < 0.61.

8.  The lens assembly of claim 1, wherein each lens element has a respective central thickness CT, and wherein the CT of at least 6 of the 7 lens elements complies CT/TTL<0.07.

9.  The lens assembly of claim 1, wherein $f_1/EFL<0.9$.

10.  The lens assembly of claim 1, wherein a focal length $f_5$ of lens element L5 fulfills $|f_5/EFL|>4.0$.

11.  The lens assembly of claim 1, wherein a focal length $f_5$ of lens element L5 fulfills $|f_5/EFL|>6.0$.

12.  The lens assembly of claim 1, wherein a focal length $f_6$ of lens element L6 fulfills $f_6/EFL|>15.0$.

**13.** The lens assembly of claim 1, wherein a focal length $f_6$ of lens element L6 fulfills $f_6/EFL| > 30.0$.

**14.** The lens assembly of claim 1, wherein SDL =12mm and wherein FOV < 85 degrees.

**15.** The lens assembly of any of the claims 1-14, wherein the lens assembly is included in a smartphone.

FIG. 1

FIG. 2A

Front sag

thickness

Central thickness

rear sag

Optical axis

FIG. 2B

FIG. 2C

Central air gap

Optical axis

Front sag

Air gap

Rear sag

FIG. 2D